# EUROPÄISCHE PATENTANMELDUNG

(11) **EP 1 072 484 A1**
(43) Veröffentlichungstag der Anmeldung: **31.01.2001**
(21) Anmeldenummer: 00114400.5
(22) Anmeldetag: 05.07.2000
(51) Int. Cl.: B60R 22/195

(54) **Gurtstraffer mit Trennelement für Strafferseilabdeckung**

(30) Priorität: 27.07.1999 DE 29912660 U
(71) Anmelder: Dittrich, Klaus-Jürgen, 28832 Achim (DE)
(72) Erfinder: Dittrich, Klaus-Jürgen, 28832 Achim (DE)

(57) **Zusammenfassung**

Die dargestellte Ausführung ist dadurch gekennzeichnet, daß eine Seilabdeckung (30) das Zugseil (6) zwischen dem Gurtschloß (20) und der Seilumlenkung (8) umgibt. Die Seilabdeckung (30) ist als starres, formstabiles Teil -bevorzugt aus Kunststoffmaterial- ausgebildet und ist mit einem Ende mit geringem Spiel auf einen Ansatz der Seilumlenkung (8) aufgeschoben. Mit dem anderen Ende stützt sich die Seilabdeckung (30) gegen eine Stützfläche des Gurtschlosses (20) ab. An der Seilumlenkung (8) ist eine Klinge (16) quer zur Zugrichtung des Zugseiles (6) angeordnet. Die Schneidkante der Klinge (16) ist gegen den Stirnrand der Seilabdeckung (30) gerichtet. Beim Auslösen des Straffvorganges wird die Seilabdeckung (30) an den an der Seilumlenkung (8) befestigten Klingen (16) vorbeigeschoben, die dabei die Seilabdeckung (30) aufschlitzen, so daß die formstabil ausgeführte Seilabdeckung (30) den Straffvorgang nicht behindern kann.

## Beschreibung

Die Erfindung betrifft einen Gurtstraffer für ein Fahrzeuginsassen-Rückhaltesystem, mit einem Kolben, der in einem Zylinder verschiebbar ist und mittels eines Zugseils um eine Seilumlenkung herum mit einem Gurtschloß verbunden ist und bei Zündung eines Treibmittels das Gurtschloß gegen die Seilumlenkung zieht, und mit einem Seilmantel, der das Zugseil zwischen dem Gurtschloß und der Seilumlenkung umkleidet.

Ein derartiger Gurtstraffer ist beispielsweise aus der G 85 02 536.4 oder der DE 298 11 538.7 bekannt, bei dem der Seilmantel aus weichem elastischen Material, beispielsweise Gummi, besteht, um den bei einer Auslösung des Gurtstraffers erfolgende Verkürzung des Zugseils zwischen Seilumlenkung und Gurtschloß nicht zu behindern. Dabei ist es jedoch nachteilig, daß dieser bekannte weiche, elastische Seilmantel, der bevorzugt als Gummi-Balg ausgebildet ist, der Konstruktion keine Steifigkeit verleiht, so daß das Gurtschloß seine Lagestabilität lediglich über das Zugseil erhält. Unvermeidliche Vibrationen im Kraftfahrzeug führen dann dazu, daß das Gurtschloß ebenfalls in Vibrationsbewegung gerät, dabei gegen umliegende feste Fahrzeugeinbauten anschlägt, wodurch unerwünschte Vibrationsgeräusche entstehen.

Aufgabe der Erfindung ist es daher, einen Gurtstraffer der eingangs genannten Art derart weiterzubilden, daß unerwünschte Vibrationsgeräusche zwischen dem Gurtschloß und angrenzenden Fahrzeugeinbauten vermieden werden.

Diese Aufgabe wird bei dem Gurtstraffer der eingangs genannten Art erfindungsgemäß dadurch gelöst, daß der Seilmantel als starres selbsttragendes Rohr ausgebildet ist, und daß an der Seilumlenkung oder an dem Gurtschloß mindestens eine Klinge befestigt ist, die den Seilmantel bei einer Annäherung des Gurtschlosses an die Seilumlenkung aufschlitzt.

Die Vorteile der Erfindung liegen insbesondere darin, daß der Seilmantel als starres selbsttragendes Rohr ausgebildet ist, welcher das Gurtschloß - zusätzlich zum Zugseil - abstützt und eine steife Verbindung von der Seilumlenkung zum Gurtschloß bildet, und daß andererseits bei einer Auslösung oder Zündung des Gurtstraffer der Seilmantel in Zugrichtung aufgeschlitzt wird, wenn das Gurtschloß vom Kolben gegen die Seilumlenkung gezogen wird, so daß der Seilmantel mit seiner Eigensteifigkeit die Annäherung des Gurtschlosses an die Seilumlenkung, d.h. einen Straffvorgang nicht behindert.

Besonders bevorzugt ist der rohrförmige Seilmantel formschlüssig oder kraftschlüssig an dem Gurtschloß oder an der Seilumlenkung gehalten, um die Steifigkeit der Verbindung zwischen Seilumlenkung und Gurtschloß zu erhöhen. Zu diesem Zweck ist bevorzugt ein Ende des rohrförmigen Seilmantels mit geringem Spiel auf einen Ansatz aufgeschoben, der an der Seilumlenkung angeformt ist und in Zugrichtung gegen das Gurtschloß ragt. Unterhalb des Seilmantels sitzt an diesem Ansatz die Kinge oder mehrere Klingen, deren Schneide(n) gegen den Umfangsrand des Seilmantels gerichtet ist/sind. Die Klingen verlaufen quer zur Zugrichtung des Zugseils, sie besitzen an ihrem äußeren, den Seilmantel überragenden Ende einen stumpfen Wulst, der verhindert, daß die Fahrzeuginsassen die Klingen berühren und sich verletzen können.

Der Seilmantel besitzt in Seilzugrichtung eine Länge, die geringfügig größer ist als der Abstand zwischen dem Gurtschloß und den Klingen und ist im Bereich der Klingen leicht eingekerbt, um ein Verdrehen des Seilmantels relativ zu den Klingen zu verhindern. Der Seilmantel ist bevorzugt aus Kunststoff ausgebildet, der eine ausreichende Festigkeit aufweist.

Vorteilhafte Weiterbildungen der Erfindung sind durch die Merkmale der Unteransprüche gekennzeichnet.

Im folgenden wird ein Beispiel der Erfindung anhand der Zeichnungen näher erläutert. Es zeigen:
- Figur 1: eine Seitenansicht eines Gurtstraffers;
- Figur 2: eine vergrößerte Seitenansicht des Gurtstraffers in Figur 1, wobei nur der Bereich zwischen Gurtschloß und Seilumlenkung dargestellt ist;
- Figur 3: eine der Figur 2 entsprechende Frontansicht;
- Figur 4: einen Schnitt durch eine an der Seilumlenkung befestigte Klinge; und
- Figur 5: eine der Figur 3 entsprechende Darstellung während eines Straff-Vorganges.

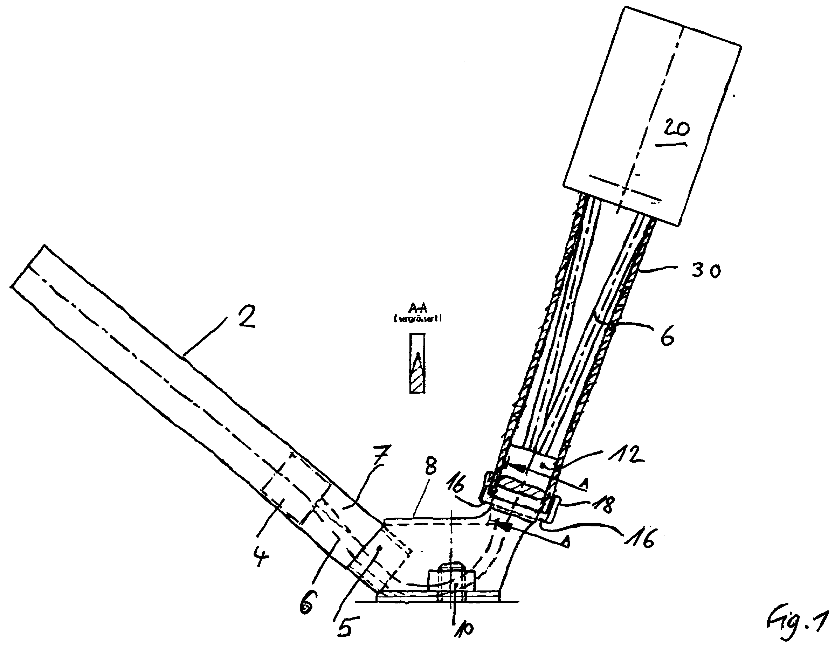

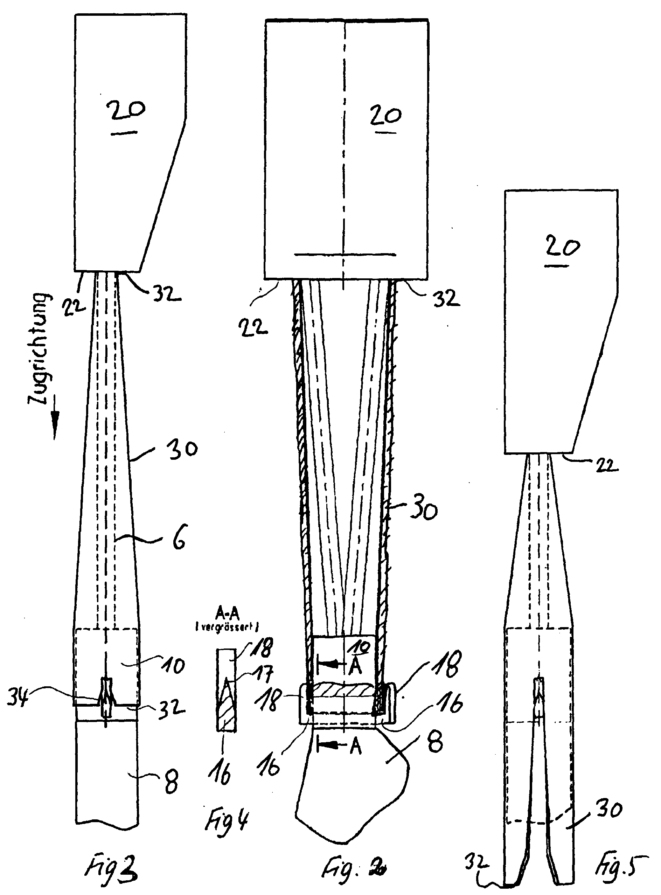

Die Figuren 1, 2 und 3 zeigen eine Seitenansicht und eine Frontansicht eines Gurtstraffers, teilweise im Schnitt. In einem Zylinder 2 ist ein Kolben 4 verschiebbar angeordnet, Mit dem Kolben 4 ist ein Zugseil 6 verbunden, welches von dem Kolben 4 durch eine vordere Stirnwand 5 des Kolbens hindurchgeführt ist und von einer Seilumlenkung 8 eine Richtungsumlenkung erfährt und mit einem Gurtschloß 20 verbunden ist. Das Zugseil 6 ist in der dargestellten Ausführungsform als ein Doppelseil ausgebildet, welches in Form einer Schleife um einen Anlenkzapfen des Gurtschlosses 20 herum verläuft. Die Seilumlenkung 8 ist mittels geeigneter Befestigungselemente 10 in dem Innenraum des Kraftfahrzeuges befestigt. Ein Gasgenerator (nicht dargestellt) gibt bei einer - beispielsweise durch einen Auffahrunfall - ausgelösten Zündung ein Treibmittel in einen Druckraum 7 zwischen den Kolben 4 und der vorderen Stirnwand 5, welches den Kolben 4 samt Zugseil 6 und Gurtschloß 20 von einer vorderen Normalposition nach hinten in den Zylinder 2 in eine Straffhalteposition treibt.

Ein Seilmantel 30 umgibt das Zugseil 6 zwischen dem Gurtschloß 20 und der Seilumlenkung 8. Der Seilmantel ist als starres, selbsttragendes Rohr - bevorzugt aus Kunststoffmaterial - ausgebildet und ist mit einem Ende mit geringem Spiel auf einen Ansatz 10 der Seilumlenkung 8 aufgeschoben, der in Zugrichtung des Zugseils 6 gegen das Gurtschloß 20 gerichtet ist. Mit seinem anderen Ende, und zwar mit seinem Stirnrand 32, stützt sich der Seilmantel 30 gegen eine Stützfläche des Gurtschlosses 20 ab.

An der Seilumlenkung 8, und zwar im unteren Bereich des Ansatzes 10 ist eine Klinge quer zur Zugrichtung des Zugseils 6 angeordnet und überragt radial den Ansatz 10 auf beiden Seiten, um ein vorgegebenes geringes Maß, welches etwa der Wandstärke des Seilmantels 30 entspricht. Die Schneidkante der Klinge 16 ist gegen den Stirnrand 32 des Seilmantels 30 gerichtet, und die Klinge besitzt an ihren beiden radialen Enden je einen stumpfen Wulst 18, der verhindert, daß Fahrzeuginsassen gegen die Schneide der Klinge 16 greifen können. Der Seilmantel 30 besitzt in Zugrichtung des Zugseils 6 eine Länge, die geringfügig größer ist als der Abstand zwischen dem Gurtschloß 20 und der Klinge 16. Der Seilmantel 30 besitzt im Bereich der Klinge 16 Einkerbungen oder Ausnehmungen 34, durch welche die Klinge 16 radial hindurch verläuft. Der Seilmantel besitzt an dem der Seilumlenkung 8 zugewandten Ende einen Kreisquerschnitt, der zum Gurtschloß 20 hin in einen Flachquerschnitt übergeht, vgl. die Figuren 3 und 5.

Beim Auslösen eines Straffvorganges wird ein Treibmittel in den Druckraum 7 zwischen Kolben 4 und Zylinderstirnwand 5 eingeleitet. Unter der Wirkung des Treibmittels wird der Kolben zum hinteren Ende des Zylinders 2 verschoben und nimmt bei dieser Bewegung über das Zugseil 6 das Gurtschloß 20 mit, welches sich dadurch gegen die Seilumlenkung 8 bewegt. Bei Annäherung des Gurtschlosses 20 an die Seilumlenkung 8 wird der Seilmantel 30 - in Zugrichtung - an der Seilumlenkung befestigten Klingen vorbeigeschoben, die dabei den Seilmantel 30 aufschlitzen, vgl. Figur 5, so daß der Seilmantel 30 die Annäherung des Gurtschlosses an die Seilumlenkung 8, und damit einen Straffvorgang nicht behindern kann.

## Patentansprüche

1. Gurtstraffer für ein Fahrzeuginsassen-Rückhaltesystem, mit einem Kolben (4), der in einem Zylinder (2) verschiebbar ist und mittels eines Zugseils (6) um eine Seilumlenkung (8) herum mit einem Gurtschloß (20) verbunden ist und bei Zündung eines Treibmittels das Gurtschloß (20) gegen die Seilumlenkung (8) zieht, und mit einem Seilmantel (30), der das Zugseil (6) zwischen dem Gurtschloß (20) und der Seilumlenkung (8) umkleidet,
dadurch gekennzeichnet, daß der Seilmantel (30) als starres selbsttragendes Rohr ausgebildet ist, und daß an der Seilumlenkung (8) oder an dem Gurtschloß (20) mindestens eine Klinge (16) befestigt ist, die den Seilmantel (30) bei einer Annäherung des Gurtschlosses (20) an die Seilumlenkung (8) aufschlitzt.

2. Gurtstraffer nach Anspruch 1,
dadurch gekennzeichnet, daß der rohrförmige Seilmantel (30) an einem Ende formschlüssig oder kraftschlüssig von dem Gurtschloß (20) oder der Seilumlenkung (8) gehalten ist.

3. Gurtstraffer nach Anspruch 1 oder 2,
dadurch gekennzeichnet, daß ein Ende des rohrförmigen Seilmantels (30) mit geringem Spiel einen in Zugrichtung gegen das Gurtschloß (20) gerichteten Ansatz (12) der Seilumlenkung (8) umgreift.

4. Gurtstraffer nach einem der vorstehenden Ansprüche,
dadurch gekennzeichnet, daß die Klinge (16) quer zur Zugrichtung des Zugseils (6) verläuft und den Stirnrand (22) des Seilmantels (30) beidseitig geringfügig radial überragt.

5. Gurtstraffer nach einem der vorstehenden Ansprüche,
dadurch gekennzeichnet, daß die Klinge(n) (16) quer zur Zugrichtung des Zugseils (6) an dem Ansatz (12) der Seilumlenkung (8) befestigt ist/sind, auf den der Seilmantel (30) vom Gurtschloß (20) her beweglich mit geringem Spiel aufgesteckt ist.

6. Gurtstraffer nach einem der vorstehenden Ansprüche,
dadurch gekennzeichnet, daß die Klinge(n) radial außen je einen stumpfen Wulst (18) aufweist.

7. Gurtstraffer nach einem der vorstehenden Ansprüche,
dadurch gekennzeichnet, daß der Seilmantel (30) in Seilzugrichtung eine Länge besitzt, die im wesentlichen dem Abstand zwischen dem Gurtschloß (20) und der Klinge (16) entspricht.

8. Gurtstraffer nach einem der Ansprüche 1 bis 3,
dadurch gekennzeichnet, daß der Seilmantel (30) in Seilzugrichtung eine Länge besitzt, die geringfügig größer ist als der Abstand zwischen dem Gurtschloß (20) und der Klinge (16), und daß der Seilmantel (30) im Bereich der Klinge (16) Kerben (34) besitzt.

9. Gurtstraffer nach einem der vorstehenden Ansprüche,
dadurch gekennzeichnet, daß sich der rohrförmige Seilmantel (30) mit einem Ende gegen das Gurtschloß (20) abstützt und mit seinem anderen Ende gegen die an der Seilumlenkung (8) befestigten Klingen (16) läuft, wenn das Gurtschloß (20) von dem Kolben (4) gegen die Seilumlenkung (8) gezogen wird.

10. Gurtstraffer nach einem der vorstehenden Ansprüche,
dadurch gekennzeichnet, daß der Seilmantel (30) aus Kunststoff besteht.

11. Gurtstraffer nach einem der vorstehenden Ansprüche,
dadurch gekennzeichnet, daß der Seilmantel (30) zur Seilumlenkung (8) hin einen Kreisquerschnitt aufweist, der zum Gurtschloß (20) hin in einen Flachquerschnitt übergeht.
